(19) Europäisches Patentamt
European Patent Office
Office européen des brevets

(11) Publication number: **0 303 246**
**A2**

(12) **EUROPEAN PATENT APPLICATION**

(21) Application number: **88112990.2**

(51) Int. Cl.[4]: **C08G 61/08**

(22) Date of filing: **10.08.88**

(30) Priority: **12.08.87 US 84434**

(43) Date of publication of application:
**15.02.89 Bulletin 89/07**

(84) Designated Contracting States:
**AT BE CH DE ES FR GB GR IT LI LU NL SE**

(71) Applicant: **The B.F. Goodrich Company**
**3925 Embassy Parkway**
**Akron Ohio 44313(US)**

(72) Inventor: **Tenney, Linwood P.**
**89 Division Street**
**Hudson Ohio 44236(US)**
Inventor: **Lane, Parley C.**
**3040 Kilarney Street**
**Cuyahoga Falls Ohio 44221(US)**
Inventor: **Stricharczuk, Paul T.**
**6511 Marsol Road Apartment 414**
**Mayfield Heights Ohio 44124(US)**

(74) Representative: **von Kreisler, Alek, Dipl.-Chem. et al**
**Patentanwälte Von Kreisler-Selting-Werner**
**Deichmannhaus am Hauptbahnhof**
**D-5000 Köln 1(DE)**

(54) **Hydrogenated, ring-opened polymers of cycloolefins.**

(57) Hydrogenated, ring-opening polymerized polymers are obtained from cycloolefin monomers, particularly dicyclopentadiene and/or monomeric polycyclic olefins having norbornene functional groups. These polymers exhibit an excellent property profile for use as electrical insulators in that the dicyclopentadiene and monomeric polycyclic olefins with norbornene functionality provide a high heat distortion temperature polymeric polycycloolefins when hydrogenated and these polymers also exhibit greatly improved oxidative stability over the unsaturated polymers from which they were made. The dielectric constants of the hydrogenated polymers are lowered.

EP 0 303 246 A2

# HYDROGENATED, RING-OPENED POLYMERS OF CYCLOOLEFINS

## BACKGROUND OF THE INVENTION

Polymers obtained by the ring-opening polymerization of cycloolefins are well known. For example, U.S. patents 4,136,249, 4,178,424, 4,136,247 and 4,136,248, assigned to the same assignee as the present invention, describe such polymers and each is incorporated herein by reference.

Ring-opening polymerization of cycloolefins yields unsaturated polymers, and those obtained from polycycloolefin monomers, such as dicyclopentadiene, are of particular interest. These polycycloolefin monomers provide a 1,3-cyclopentene repeat structure in the unsaturated polymer, which can not be obtained by addition polymerization. These unsaturated polymers are known to be reactive (sulfur-vulcanizable) and they are known to exhibit a property profile suitable for automotive parts, particularly decorative trim.

Saturated hydrocarbon polymers, such as polypropylene and polyethylene, are generally known to exhibit improved dielectric properties, hydrolytic stability, oxidative stability and reduced water absorption when compared to polymers containing ester, amide, alcohol and other functional groups. The dielectric properties of saturated hydrocarbon polymers are desirable for electrical applications when used as insulators. The high oxidative stability of saturated hydrocarbon polymers renders them particularly desirable for outdoor applications as does their high hydrolytic stability. When saturated polymers are prepared from unsaturated polymers, there is a dramatic improvement in oxidative stability of the resulting polymer. However, with that improvement, there is often a significant reduction in the heat distortion temperature for the saturated derivatives of unsaturated hydrocarbon polymers. This reduction in heat distortion temperature may often render the polymers thermally inadequate for end use despite an improvement in oxidative stability.

Saturated derivatives of ring-opened polymerized cycloolefins exhibit lower glass transition temperatures, and thus lower heat distortion temperatures than their unsaturated precursors as shown in Figure 1. However, hydrogenated polymers of certain cycloolefins have been put to use either in blends or have found particular applications as homopolymers or copolymers. For example, Japanese patent JP 6026024 describes hydrogenated homopolymers of tetracyclododecene and its copolymers with bicyclic norbornene. These polymers are disclosed as being useful for optical materials having good transparency, water proofness (low water absorption) and heat resistance suitable for compact discs, video discs, computer discs, etc. However, high glass transition temperatures needed for certain applications cannot be obtained with these copolymers. Further, tetracyclododecene is relatively a very expensive monomer to make and is not available in the large quantities necessary for commercial productions.

In addition, Japanese patent JP 6049051, assigned to Nippon Zeon, describes a blend of vinyl chloride type polymers and hydrogenated polymers of 5-cyanonorbornene. These blends are said to exhibit high photo-deterioration resistance, solvent resistance, heat deterioration resistance and transparency and are also described as useful raw materials for lenses, automotive parts, electrical parts and lighting fixtures. For electrical applications, these blends suffer in that halogen is present, the presence of which can lead to corrosion of fine electronic circuitry.

The bicyclic norbornene monomers described in the above references are obtained by the addition reaction of cyclopentadiene and ethylene or substituted ethylene. Tetracyclododecene monomers are obtained by the Diels-Alder addition reaction of cyclopentadiene and bicyclic norbornene.

It would be advantageous to obtain hydrogenated cycloolefin polymers with much higher heat distortion temperatures, high oxidative stability, and good dielectric properties which can be used as insulators for electronic components. In addition, it would be advantageous if polymers with high heat distortion temperatures were obtained from ring-opening polymerization of more common cycloolefin monomers, such as dicyclopentadiene which is easier to make as well as purify making it an advantageous starting monomer over all other norbornene group containing monomers in that regard.

## BRIEF DESCRIPTION OF THE DRAWING

The Figure is a plot of Tg values obtained for homopolymers and copolymers of cycloolefins (both saturated and unsaturated) to show the effect of polymer composition and hydrogenation on such values.

## SUMMARY OF THE INVENTION

Compositions are provided by this invention having relatively high heat distortion temperatures and good dielectric properties suitable for use as electrical insulators and as supports for electronic components.

The compositions of this invention are substantially comprised of hydrogenated ring-opened polymerized polymers including copolymers, ter-polymers, quad-polymers, etc. derived from cycloolefin monomers of which about 10-100 weight percent are selected from dicyclopentadiene and monomeric polycyclic olefins containing a norbornene functional group.

The monomeric polycyclic olefins include higher homologs of cyclopentadiene. These monomers can be though of as cyclopentadiene trimers, tetramers, pentamers and the like, each with a ring-opening polymerizable group on the end of the molecule. High cyclopentadiene adducts of tetracyclododecenes are additional monomeric polycyclic olefins suitable for ring-opening polymerization or copolymerization and subsequent hydrogenation.

These hydrogenated, ring-opened polymerized polymers may incorporate other cycloolefin monomers, such as bicyclic norbornenes and tetracyclododecenes and/or acyclic monomers to control molecular weight. These other cycloolefin monomers may be incorporated in large quantities. The acyclic monomers are incorporated into the polymer at low levels. The compositions of this invention also include blends of these hydrogenated ring-opened polymers with additives or other polymers.

## DETAILED DESCRIPTION OF THE PREFERRED EMBODIMENTS

The hydrogenated polymer in the composition of the present invention comprises repeat units selected from the group of formulas consisting of

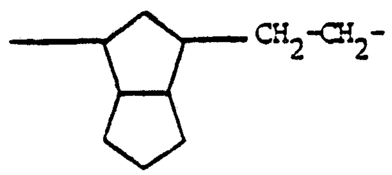

I

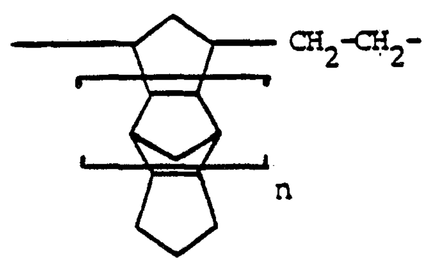

II

and

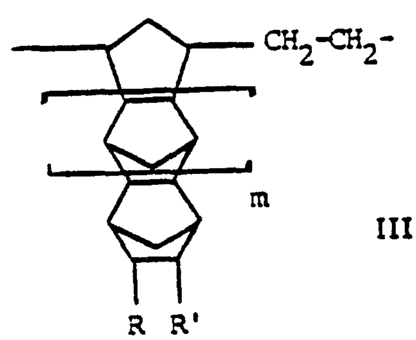

III

which are provided by the ring-opening polymerization of cycloolefin monomers such as dicyclopentadiene and/or polycyclic olefinic monomers followed by hydrogenation of the vinylene linkage and the unsaturated cyclic ring carbons, wherever present. For Formula II, n is a number of from 1-10 and for Formula III, m is a number of from 1-10 with R and R′ being defined more specifically below.

At least about 10 weight percent and up to 100 weight percent of the hydrogenated polymer comprises repeat units selected from Formulas I, II and III. Lower percentages of I, II and/or III indicate partially hydrogenated products and/or the incorporation of other monomers. It is noted that the hydrogenated polymers of this invention include hydrogenated homopolymers and copolymers, terpolymers, etc. of dicyclopentadiene and the monomeric polycyclic olefins containing a norbornene functional group. The preferred hydrogenated polymers, copolymers, etc. contain units of Formula I and are essentially 100% hydrogenated. This structure is provided by dicyclopentadiene monomers and preferably forms at least about 25% by weight of the hydrogenated ring-opening polymerized polymer, copolymer, etc. of this invention so as to provide significantly higher glass transition temperatures than polymers obtained from bicyclic norbornene monomers.

Dicyclopentadiene is the cycloolefin monomer of choice because it is readily available monomer. Dicyclopentadienes are obtained by self-dimerization of cyclopentadiene, both of which are by-products of commercial ethylene production. Because of its availability, it is most preferable to use dicyclopentadiene in quantities of at least about 50% by weight of the total cycloolefin monomer used to form the hydrogenated ring-opening polymerized polymers of this invention. Hydrogenated homopolymers and copolymers of dicyclopentadiene are also preferred embodiments of this invention and normally have glass transition temperatures in the range of about 100°C to about 250°C, which are significantly higher than the glass transistion temperature values for polymers of hydrogenated bicyclic norbornenes.

It is noted the structure of Formula I can be provided by hydrogenation of polydihydrodicyclopentadiene. Dihydrodicyclopentadiene is a derivative of dicyclopentadiene, wherein the unsaturated cyclopentene ring bound to the norbornene functional group is hydrogenated. The structure of Formula II can be provided by similarly hydrogenated derivatives of the higher homologs of cyclopentadiene.

The cycloolefin monomers which provide the structures of Formulas II and III are monomeric polycyclic olefins having a norbornene functional group. These monomeric polycyclic olefins may be used to provide homopolymers, copolymers, ter-polymers, etc. upon ring-opening polymerization. These monomeric polycyclic olefins have a higher molecular weight than dicyclopentadiene and the polymers they provide will have higher heat distortion temperatures than polymers obtained from dicyclopentadiene alone. For Formula III, R and R′ are independently selected from the group consisting of hydrogen, halogen, $C_1$-$C_{12}$ alkyl, $C_2$-$C_{12}$ alkenyl, $C_6$-$C_{12}$ cycloalkyl, $C_6$-$C_{12}$ aryl and $C_7$-$C_{12}$ alkylaryl.

Mixtures of comonomers can be used to aid in achieving a balance of desired properties. In the absence of dicyclopentadiene, the quantity of monomeric polycyclic olefin used to prepare the polymers, copolymers, ter-polymers, etc. of this invention generally ranges from about 10-100% by weight of the total amount of cycloolefin monomers. The minimum quantity of 10 weight percent of the total polycyclic olefinic monomer used provides a polymer comprising about 10 weight percent of the repeat units of Formulas II and III. Such a polymer will have a heat distortion temperature higher than a polymer of bicyclic norbornene. Smaller quantities of these monomeric polycyclic olefins can be used where dicyclopentadiene monomers are also incorporated in the polymers and provide the balance of the total repeat structures of Formulas I, II and III necessary to provide heat distortion temperatures higher than polymers of bicyclic norbornene (at least about 10 weight percent).

The monomeric polycyclic olefins that can be polymerized to give Formula II include cyclopentadiene trimers, tetramers, pentamers and the like. The monomeric polycyclic olefins that can give repeat units like Formula III include hexacycloheptadecene and substituted hexacycloheptadecene and the like. The number of cyclopentadiene repeat groups for the monomeric polycyclic olefins is limited to about 10 due to the decrease in solubility as the molecular weight of these monomers increases. In Formulas II and III, n and m are preferably limited to values of about 1 to 6 so as not to complicate the polymerization reaction. The advantages of using dicyclopentadiene, the higher homologs of cyclopentadiene and the cyclopentadiene adducts of tetracyclododecene are shown in the Figure by comparing curves A,B and C,D with curve E. Curve E generally shows lower glass transistion temperatures due to the use of substituted bicycloheptene-2. The hydrogenated products from Curve E will have Tg's of even much lower values.

In the embodiments of this invention where the hydrogenated polymer contains repeat units of Formula II and Formula III, these repeat units are provided by pre-polymerized, high molecular weight monomeric polycyclic olefins having the Formulas IV and V, respectively.

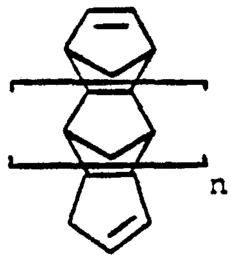

IV

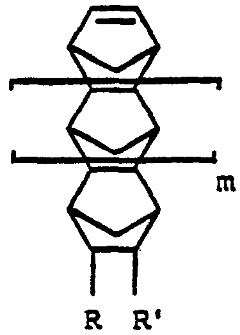

V

For Formulas IV and V, the radicals R, R′, and whole numbers n and m are as defined above for Formulas II and III. The monomers of Formula IV are also referred to as dicyclopentadene-like monomers and higher homologs of cyclopentadiene. These high molecular weight monomeric polycyclic olefins significantly enhance the heat distortion temperatures of the hydrogenated ring-opened polymer obtained. The monomeric polycycloolefins of Formula IV that will polymerize to give repeat structures like II, can be obtained by the spontaneous cyclo-addition Diels-Alder reactions which occur within a volume of dicyclopentadiene monomers. The monomeric polycyclic olefins of Formula IV are normally present in volumes of dicyclopentadiene at low levels (less than 5%). The in situ production of these high molecular weight monomeric polycycloolefins is another advantage to using dicyclopentadiene monomers. The monomeric polycyclic olefins having norbornene functionality can also be obtained by the further cyclo-addition Diels-Alder reaction of cyclopentadiene. For example, heptacyclocosene is a monomeric polycycloolefin of Formula IV where n = 2. This monomer is a tetramer of cyclopentadiene.

The monomeric polycyclic olefins of Formula V are obtained from the cyclo-addition Diels-Alder reaction of cyclopentadiene with tetracyclododecenes, hexacycloheptadecenes, octacyclodoco- senes, etc. For example, cyclo-addition Diels-Alder reaction of cyclopentadiene with the tetracyclododecenes of Formula VII defined below provide hexacycloheptadecene which can further react with cyclopentadienes to produce octacyclodocosenes.

As indicated above, the hydrogenated polymers provided by this invention include those derived from at least 10% by weight of the monomeric polycyclic olefins of Formulas IV and V. However, quantities below 10% by weight of these monomeric polycyclic olefins may be incorporated in the polymers, copolymers, etc. of this invention derived from dicyclopentadiene.

Although the use of these polycyclic olefin monomers having norbornene functionality are very useful when utilized in small quantities within a copolymer, it should be recognized that homopolymers of such monomeric polycyclic olefins are included within the scope of this invention.

The cycloolefin monomers which provide the repeat structures of Formulas I, II and III above can be used with other cycloolefin monomers such as norbornene, substituted norbornenes, substituted dicyclopentadiene, tetracyclododecene, substituted tetracyclododecene and monocycloolefins.

Preferred bicyclic norbornenes are of the formula below

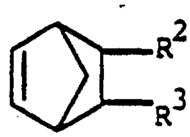

VI

wherein $R^2$ and $R^3$ are selected from hydrogen, $C_1$-$C_{12}$ alkyl, $C_6$-$C_{12}$ aryl or $C_6$-$C_{12}$ cycloalkyl. Examples of norbornenes of Formula VI include 2-norbornene, 5-methyl-2-norbornene, 5-ethyl-2-norbornene, 5-isopropyl-2-norbornene, 5-butyl-2-norbornene, 5,6-dimethyl-2-norbornene, 5,5-dimethyl-2-norbornene, 5-octyl-2-norbornene, 5-decyl-2-norbornene, 5-dodecyl-2-norbornene and 5-octadecyl-2-norbornene. These norbornenes

can be manufactured by a Diels-Alder reaction of cyclopentadiene with one or more selected olefins such as ethylene, substituted ethylene or the longer chain olefins such as 2-butene, 5-methyl-1-butene, 1-decene and 1-dodecene. Ethylene produces 2-norbornene while 2-butene produces 5,6-dimethyl-2-norbornene. Cyclopentadiene and 1-decene produce 5-octyl-2-norbornene while 1-dodecene produces 5-decyl-2-norbornene with cyclopentadiene.

Suitable tetracyclododecenes include tetracyclododecene itself and substituted tetracyclododecenes. The substituted tetracyclododecenes must have substituents which do not interfere with the ring-opening polymerization. Examples of such substituents include alkyl radicals of from 1-12 carbon atoms, cycloalkyl radicals of from 6-12 carbon atoms and aromatic radicals of from 6-12 carbon atoms. Preferred tetracyclododecenes conform to the formula below

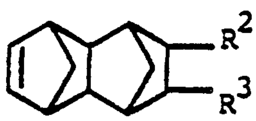

VII

wherein $R^2$ and $R^3$ are selected from hydrogen, $C_1$-$C_{12}$ alkyl or $C_6$-$C_{12}$ cycloalkyl or $C_6$-$C_{12}$ aryl. Examples of tetracyclododecenes in accordance with the Formula VII above include tetracyclododecene, 2-methyltetracyclododecene, 2-ethyltetracyclododecene, 2-isopropyl-tetracyclododecene, 2,3-dimethyl-tetracyclododecene and the like. Tetracyclododecenes are prepared by Diels-Alder reaction of cyclopentadiene with selected substituted bicyclic norbornenes. Tetracyclododecenes are often by-products of the Diels-Alder addition reaction used to prepare the corresponding bicyclic norbornenes. Unlike bicyclic norbornenes, tetracyclododecenes provide high glass transition temperature polymers and are used in large quantities in the preferred polymers of this invention. Polymers of this invention may contain up to about 90% by weight substituents provided by tetracyclododecene.

Substituted dicyclopentadienes provide repeat structures similar to those of Formula I; however, one or more of the hydrogens on the cyclopentene groups and/or one of the ethylene hydrogens is replaced with a suitable substituent. Suitable substituent groups are those which do not interfere with the ring-opening polymerization. Such substituents include $C_1$-$C_{12}$ alkyl and alkylalkene radicals, $C_6$-$C_{12}$ cycloalkyl radicals and $C_6$-$C_{12}$ aryl and alkylaryl radicals. Also included are the halo, hydroxy, carboxyl, amine and nitro derivates of these substituted dicyclopentadienes. Upon hydrogenation, aryl and alkylene radicals become saturated and any carboxyl or nitro group is reduced to a hydroxy or amine group, respectively. Hydrogenation may also disassociate some of the substituents from the polymerized cyclopentadiene monomer, leaving hydrogen.

The substituted bicyclic norbornenes that are suitable are those having substituents which do not interfere with the ring-opening polymerization. Such substituents are those described above for substituted dicyclopentadienes. It should be noted however that in preferred embodiments of this invention, the amount of bicyclic norbornenes is eliminated or drastically reduced. In preferred embodiments, dicyclopentadiene is utilized instead of bicyclic norbornenes to give higher glass transition polymers. In these preferred embodiments, small amounts of these bicyclic norbornenes may be desirable to help dissolve other monomers and/or improve processing characteristics of the polymers obtained. These features are secondary to the primary object herein of providing a hydrogenated ring-opened polymerized polymers having high heat distortion temperatures.

Other cycloolefin monomers which can be incorporated in the hydrogenated polymer are those of Formula VIII below

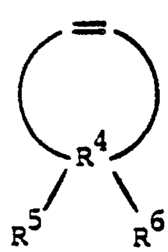

VIII

wherein $R^4$ is a divalent alkyl radical of from 3-8 carbon atoms which forms a 5-8 membered monocyclic structure with one or two, or three unsaturated carbon atoms in the ring. These cycloolefin monomers of

Formula VIII polymerize by a ring-opening mechanism to provide alkenyl or branched ($R^5$ and/or $R^6$) alkenyl polymer segments having olefinicaly unsaturated carbons therein upon polymerization. $R^5$ and $R^6$ may be $C_1$-$C_6$ alkyl or $C_2$-$C_6$ alkenyl or $C_6$-$C_{12}$ phenyl or $C_6$-$C_{12}$ cycloalkyl or $C_6$-$C_{12}$ cycloalkenyl. Examples of the cycloolefin monomers of Formula VIII include cyclopentene, cycloheptene, cyclooctene, cyclodecene, cyclopentadiene, cyclododecene, cyclododecyl and cyclododecatriene. These segments will become saturated upon hydrogenation of the polymer. The use of cycloolefins of Formula VIII may be desired to modify the molecular structure of the polymers so as to simplify processing. They may be used in a quantity up to about 20 weight percent of the total cycloolefin monomers. Quantities higher than 20 weight percent significantly reduce the heat distortion temperature. Such cycloolefin monomers are not required to perform the objects of the present invention.

Non-conjugated acyclic olefins may also be used to modify the molecular weight. These non-conjugated acyclic olefins preferably have from 2-12 carbon atoms and most preferably from 2-8 carbon atoms. Examples of suitable non-conjugated acyclic olefins include the monoolefins 1-butene, 3-methyl-1-butene, 2-pentene, 4-methyl-2-pentene and 5-ethyl-3-octene. Examples of other non-conjugated acyclic olefins include the diolefin 1,6-hexadiene and the triolefin 1,4,7-octatriene. The non-conjugated acyclic olefins or mixtures thereof may be used in a molar ratio of olefin to other cycloolefin monomers in the range of about 0.0001:1 to about 0.5:1 and preferably from about 0.01-0.3:1. Alpha-olefins are preferred.

The general nature of the polymerized structure is believed to be a linear polymer having the monomer structures randomly distributed throughout in proportions which correspond to the quantity of monomer utilized. The glass transitions of copolymer compositions, ter-polymer compositions, etc. are related to the weight fractions of monomers in the polymerization recipes.

A suitable catalyst system for preparation of the ring-opened polymers comprises (1) a molybdenum or tungsten salt catalyst and (2) a co-catalyst of a dialkylaluminum halide, an alkylaluminum dihalide, or a mixture o a trialkylaluminum compound with a halide source. Other catalysts and co-catalysts are also suitable. Examples of useful molybdenum and tungsten salts include the halides such as chlorides, bromides, iodides, and fluorides. Specific examples of such halides include molybdenum pentabromide, molybdenum hexabromide, molybdenum pentaiodide, molybdenum hexafluoride, tungsten hexachloride, tungsten hexafluoride and the like. Other representative salts include those of acetylacetonates, sulfates, phosphates, nitrates, and the like. Mixtures of salts can also be used. The more preferred salts are the molybdenum halides, especially molybdenum pentahalides. Excellent results were obtained using $MoCl_5$. The ammonium salts described by Minchak in U.S. Patent No. 4,426,502 are also suitable.

The alkylaluminum compounds used in combination with the molybdenum or tungsten salts may be dialkylaluminum halides, alkylaluminum dihalides, or a mixture of a trialkylaluminum compound with a halide source. Each alkyl group may contain from 2 to about 12 carbon atoms, preferably from 2 to about 4 carbon atoms. Iodine is a commonly used halogen in these alkylaluminum compounds. Specific examples of such compounds include diethylaluminum iodide,. ethylaluminum diiodide, propylaluminum diiodide and ethylpropylaluminum iodide. A mixture of trialkylaluminum compound and an iodine source such as elemental iodine may also be used where each alkyl group is as defined above, e.g., a mixture of triethylaluminum and elemental iodine. Other iodine sources include methylene diiodide, potassium iodide, titanium tetraiodide and the like. Excellent results were obtained using diethylaluminum iodide.

The molybdenum or tungsten salt is generally employed at a level from about 0.01 millimoles to about 50 millimoles per mole of a total cycloolefin monomer, preferably from about 0.5 millimoles to about 10 millimoles per mole of total monomer. The organoaluminum compounds described above are generally used in a molar ratio of organoaluminum compound to molybdenum and/or tungsten salt(s) from about 10/1 to about 1/3, preferably from about 5/1 to about 3/1. Elemental iodine, when used, typically is used in a range from about 0.1 mole to about 10 moles of iodine per mole of organoaluminum compound. When other sources of iodine are employed, sufficient iodine source is incorporated to provide the above concentration of elemental iodine in the catalyst.

In a preferred embodiment, the molybdenum or tungsten salt is dissolved in a solvent prior to incorporation into the polymerization mixture. In the absence of a solvent for the molybdenum or tungsten salt, the polymerization proceeds with some difficulty due to the presence of insoluble portions of salt. A preferred solvent for the molybdenum or tungsten salt comprises at least one alkyl ester of a saturated carboxylic or dicarboxylic acid. Use of an ester solvent has been found to produce a brief induction period of about 1 to about 5 minutes after addition of the molybdenum or tungsten salt to the monomer mixture. Such an induction period allows addition of all components of the reaction mixture before substantial polymerization begins. The result is more uniform process control and, ultimately, substantially gel-free polymers which are more readily recovered from the reaction vessel and are more easily processable than gelled polymers.

Suitable alkyl esters of saturated carboxylic or dicarboxylic acids typically contain from 2-5 carbon atoms and 0 or 1 bromine or chlorine atoms, exemplified by methyl formate, ethyl formate, methyl chloroformate, ethyl chloroformate, butyl chloroformate, methyl acetate, ethyl acetate, isopropyl acetate, n-propyl acetate, methyl bromoacetate, ethyl bromoacetate, ethyl chloroacetate, methyl propionate, ethyl propionate, ethyl 2-bromopropionate, ethyl 3-bromopropionate, methyl 2-chloropropionate, dimethylmalonate, and the like. Excellent results were obtained using ethyl acetate.

The above ester solvents may be used together with at least one inert cosolvent. The cosolvent typically constitutes from 0% to about 90% by weight of the total catalyst solvent weight. Additional cosolvent may also be used during polymerization. The additional cosolvent is typically up to about 500 times and more, preferably up to about 150 times, the total catalyst solvent weight. Suitable inert cosolvents include aliphatic or cycloaliphatic hydrocarbon cosolvents containing about 4-10 carbon atoms such as pentane, hexane, heptane, octane, cyclohexane, cyclooctane and the like; aromatic hydrocarbon cosolvents containing about 5-14 carbon atoms and which are liquid or easily liquified such as benzene, toluene, naphthalene and the like; and substituted hydrocarbons wherein the substituents are inert, such as dichloromethane, chloroform, chlorobenzene and the like. Benzene and toluene are excellent cosolvents.

A polymerization activator may be used but is generally not needed. Examples of activators include water, methanol, ethanol, isopropyl alcohol, benzyl alcohol, phenol, ethyl mercaptan, 2-chloroethanol, 1,3-dichloropropanol, p-bromophenol, epichlorohydrin, ethylene oxide, cyclopentene-2-hydroperoxide, cumyl hydroperoxide, tertiary butyl peroxide, benzoyl peroxide, and air or oxygen. Excellent activation is obtained by using air or a peroxide or hydroperoxide as the activator, especially by using the organic peroxides such as benzoyl peroxide.

The activator may be employed in a range from about 0.1 moles to about 3 moles per mole of organoaluminum compound, more preferably from about 0.1 to about 1 mole per mole. The activator may be added at any point in the charging procedure, but it is more preferably added last.

The monomers may be added at any point in the charging procedure. A preferred charging procedure is as follows. The monomers and solvent(s) are added to the reaction vessel first. These ingredients may be added separately or as a mixture. The alkylaluminum iodide compound, or mixture of trialkylaluminum compound and iodine source, is added next, usually as a solution in a cosolvent such as benzene or toluene described heretofore. The molybdenum or tungsten salt is added next as a solution in a mixture of cosolvent and ester solvent described heretofore, followed by the activator if used.

Impurities such as water (in amounts larger than suitable for use as an activator) and the like should be removed prior to addition of the molybdenum or tungsten compound. The alkylaluminum iodide compound or mixture of trialkylaluminum compound and iodine source may be used to titrate the monomers or mixtures of monomers and solvent(s) until a color change from pink to colorless or slightly yellow is noted. A catalytically effective amount of alkylaluminum iodide compound or a mixture of trialkylaluminum compound and iodine source may then be added, followed by addition of the molybdenum or tungsten compound. The end point of the titration is typically difficult to pinpoint exactly. With minor impurities present, up to ten times the catalytically effective amount and more of the alkylaluminum iodide or mixture of trialkylaluminum compound and iodine source may be required to render the impurities harmless.

The mixing of catalyst components and the polymerization are preferably carried out in an inert atmosphere such as nitrogen and in the substantial absence of air or water. The polymerization may be performed as a batch or continuous operation and is conducted under sufficient pressure to keep the monomers and solvents in liquid state, the pressure required depends upon the reaction temperature. The particular ester solvent system selected must be liquid under the reaction conditions used. The reaction mixture in the reactor may be cooled or heated to the polymerization temperature at the start of the additions or at any point during addition of the various reactants. Generally, polymerization temperatures from about 10°C to about 100°C. can be used, although the reaction generally proceeds especially well at about 20°-75°C. The polymerization may be short-stopped by the addition of alcohols, amines, alkanolamines or carboxylic acids such as ethanol, diethylamine, acetic acid, ethanolamine and the like.

At the conclusion of the polymerization, the copolymers may be isolated by any method known to the art such as by direct drying an alcohol such as methanol, ethanol, isopropanol or the like, or by steam or hot water stripping. The polymer is recovered and may be washed further with water or an alcohol and then dried.

The ring-opened polymers are high molecular weight products typically having dilute solution viscosities (DSV) ranging from about 0.2 to about 6, more generally from about 0.5 to about 3. By dilute solution viscosity is meant a value obtained using the following formula

$$DSV = \ln(\underline{t}/\underline{t_0})/\underline{c}$$

wherein $t_0$ is toluene flow time (or cyclohexane flow time) and t is flow time of a polymer solution in toluene (both measured at 25°C in toluene using an Ostwalt-Fenske viscometer), and c is the concentration of the polymer solution (measured in grams of polymer per deciliter of toluene at 25°C). In this case c was 0.25 grams of polymer per deciliter of toluene. The DSV is regarded as a measure of molecular weight and is reported in units of deciliters per gram. Toluene and sometimes cyclohexane are the preferred solvents for this measurement.

The method of polymerization described above is a solution polymerization procedure. Although many bulk polymerization processes for cycloolefin monomers are known, such as those disclosed in U.S. Patent Nos. 4,418,179, 4,418,178, and 4,426,502, subsequent hydrogenation of bulk polymerized polymers is very difficult. To obtain complete hydrogenation, the polymer must be dissolved in solution and any benefits obtained from bulk polymerization are lost. The disclosures of the organoammonium molybdate and tungstate catalysts, the alkoxy alkylaluminum and alkoxy alkylaluminum halide co-catalysts and the bulk polymerization procedures provided in U.S. Patent No. 4,426,502 are incorporated herein by reference for the sake of completeness.

Hydrogenation of the ring-opened polymers may be accomplished within the ring-opening polymerization solution without isolating the unsaturated intermediate ring-opened polymers. Alternatively, the polymers may be isolated from the polymerization solution by conventional procedures such as coagulation with a non-solvent followed by filtration. Hydrogenation may proceed within solvents such as benzene, toluene, cyclohexane, chlorobenzene or mixtures of such solvents. The hydrogenated polymers can be isolated from these solvents by conventional isolation procedures such as coagulation followed by filtration. The isolated polymers can be dried and processed, as desired, into molded articles.

Hydrogenation of the ring-opened polymerized polymers may be accomplished by any conventional method used for olefin hydrogenation. The use of transition metal catalysts for olefin hydrogenation is well known in the art as indicated by Kirk-Othmer in Encyclopedia of Chemical Technology, 6, (1978), pp. 583-584. James discusses a series of transition metal catalysts within Advancements in Organometallic Chemistry, 17 (1979) 319. In addition, Kirk-Othmer describes transition metal catalysts suitable for hydrogenation in the Encyclopedia of Chemical Technology (1978) at volume 6, p. 793 and the volume 4, p. 842, which include nickel, cobalt, platinum, palladium, chromium, zinc, rhodium and molybdenum. The portions of the Encyclopedia of Chemical Technology referred to above are incorporated herein by reference for the discussion of hydrogenation catalysts and hydrogenation procedures therein. Complexes of these transition metals are utilized to provide catalysts for a hydrogenation reaction within a homogeneous system.

The preferred hydrogenation catalysts for these polymers are nickel complexes used in conjunction with alkylaluminum co-catalysts. Alternatively, nickel, platinum or platinum on a support such as carbon, calcium carbonate or silica are also excellent hydrogenation catalysts for these polymers, as is lithium aluminumhydride or diimides. Hydrogen is passed through the catalyst solution to obtain reduction of the polymers and saturation of the olefinic carbons. It is preferable to maintain the solution under an inert atmosphere, such as nitrogen or argon to prevent the loss of catalyst activity. Hydrogenation may proceed at preferred temperatures of from 100°-200°C.

Hydrogenation of the olefinic group may be substantially complete or only a portion of these groups may be hydrogenated. Preferably, at least 50% of the olefinic carbons are saturated by hydrogenation. Hydrogenation imparts greater oxidative stability to the polymers. The hydrogenated products have improved electrical properties (see Table 4) and exhibit high heat distortion temperatures, although the glass transition temperature is below those of the unsaturated ring-opened precursors. The reduction in glass transition temperature is acceptable for many applications. When the higher glass transition polymers are required, the bicyclic norbornene monomer is not used. Dicyclopentadiene, tetracyclododecenes, hexacycloheptadecenes (Formula V) and the higher homologs of cyclopentadiene (Formula IV) are the monomers used, in the most preferred embodiments.

The hydrogenated polymers of this invention can be blended with other thermoplastic polymers and may contain other additives which enhance desired characteristics. Examples of such additives include stabilizers, flame retardants, impact modifiers, fillers, colorants, flow modifiers and reinforcing fibers or particles. Examples of suitable impact modified polymers are those described in U.S. Patent Nos. 4,418,178 and 4,418,179, which are incorporated herein by reference for said description therein. Compositions of this invention may contain up to 50% of the additives and/or additional polymers. Additives are only introduced in a quantity necessary to provide the desired additive effect and such quantities are within the knowledge of those skilled in the art. The dielectric properties are also improved by the hydrogenation process. Table 4 below shows the lowering of the dielectric constant that is achieved when unsaturation is removed from a

polymer.

## Preparation of Polymers with Hexacycloheptadecene

### Examples 1-6

Copolymers of hexacycloheptadecene (HH) and methyltetracyclododecene (MTD) of varying composition were prepared by a standard procedure for Examples 1-5. For Example 6, homopolymers of hexacycloheptadecene were prepared by the same procedure.

Polymerization of seived monomers proceeded in cyclohexane using dry, capped seven ounce bottles. The quantity of monomer varied in each example with the total monomer varying from about 10-20 grams. The hexacycloheptadecene (HH) was used at 80% purity and the methyltetracyclododecene (MTD) was used at 98% purity. The quantity of cyclohexane was generally about 80 milliliters. Polymerization proceeded in the presence of hexene-1, ethylaluminum sesquichloride and molybdenum pentachloride catalyst. The total solids content of the polymerization medium was about 15% by weight. The ratio of monomer to n-hexane-1, was about 0.6, the molar ratio of monomer to catalyst was about 2000 and the molar ratio of catalysts to ethylaluminum sesquichloride was about 5.0. The ethylaluminum sesquichloride was used in a solution of about 25 weight percent in heptane and the molybdenum pentachloride was used in about 1.6 weight percent ethylacetate/ toluene (25:75 weight percent).

The polymerization was allowed to proceed for about 30 minutes and the polymer was precipitated in isopropyl alcohol containing Ethyl 330 hindered phenol antioxidant. The polymer was dried in a vacuum oven. The varying quantities of monomer used in Examples 1-6 is illustrated below in Table 1.

### Experimental

Glass transition temperatures were determined for the polymers of Examples 1-6, and all subsequent examples, using a DuPont 990 or 1090 Thermal Analyzer equipped with a differential scanning calorimeter (DSC) cell. Sample scans were conducted under a nitrogen purge with a heat rate of about 20°C per minute. Multiple scans were employed to determine that volatiles were removed or stresses relieved from the samples that could affect results. Midpoints of the large endotherm in the curves are reported.

Table 1

$T_g$ Values for Hexacycloheptadecene/Methyltetracyclododecene Copolymers

| Example No. | 1 | 2 | 3 | 4 | 5 | 6 |
|---|---|---|---|---|---|---|
| Polymer composition (wt.% HH/MTD) | 10/90 | 25/75 | 50/50 | 75/25 | 85/15 | 100/0 |
| Dilute Solution Viscosity dl/g in toluene, 25°C | --- | 0.58 (0.56)[a] | 0.50 | 0.17 (some gel) | gel | gel |
| Glass Transition Temperature, °C ($N_2$, 20°C/min. heat rate, 3rd run) | --- | 210 (213)[a] | 225 | 228 | 244 | 248 |

[a] A repeat run under conditions as identical as possible.

## Hydrogenated Hexacycloheptadecene/Methyltetracyclododecene Polymers

Example 7-A

Hexacycloheptadecene/methyltetracyclododecene monomers were polymerized as described above in Examples 1-6. For Examples 7-A the quantity of hexacycloheptadecene was about 5.23 mls. (4.86 grams) and the quantity of methyltetracyclododecene was about 10 mls. (10 g). In that the hexacycloheptadecene was in a purity of about 80%, the ratio of hexacycloheptadecene to methyltetracyclododecene was about 25:75. Hexene was used in the quantity described in Examples 1-6 (about 18 mls., 12 g) and the ethylaluminum sesquichloride (25 weight percent in heptane) was used in a quantity of about 0.23 mls. (0.21 g). A molybdenum pentachloride catalyst was used, similar to that described in Example 1-6 (0.88 mls., 0.72 g). The volume of cyclohexane was about 80 mls. for the polymerization reaction.

Subsequent to polymerization, the polymer solution was diluted to 7.5% total solids with cyclohexene and hydrogenated for approximately 4 hours in a Parr reactor at 150°C, 200 psig $H_2$, using 65% nickel on aluminum catalyst at 5 grams/100 grams solution. The final product was filtered (3 microns) using filter aid and the polymer precipitated in isopropyl alcohol and dried in a vacuum oven at 50°C overnight. The product for Example 7-A exhibited a dilute solution visocity of 0.596dl/g (cyclohexane, 25°C), and exhibited a glass transition temperature (Tg) of 174°C under nitrogen, run at a 20°C/minute heat rate, for the third run. The polymer was 95% hydrogenated based on infra-red spectroscopic analysis.

Example 7-B

Hexacycloheptadecene/methyltetracyclododecene monomers were polymerized as described above in Examples 1-6. The quantity of hexacycloheptadecene was about 6.76 mls. (6.28 grams) and the quantity of methyltetracyclododecene was about 9.1 mls. (9.0 g). In that the hexacycloheptadecene was in a purity of about 80%, the ratio of hexacycloheptadecene to methyltetracyclododecene was about 35:65. Hexene was used in the quantity described in Examples 1-6 (about 15 mls., 10 g) and the ethylaluminum sesquichloride (25 weight percent in heptane) was used in a quantity of about 0.20 mls. (0.18 g). A molybdenum pentachloride catalyst was used, similar to that described in Examples 1-6 (0.75 mls., 0.60 g). The volume of cyclohexane was about 83 mls. for the polymerization reaction.

Subsequent to polymerization, the polymer solution was diluted to 7.5% total solids with cyclohexene and hydrogenated for approximately 4 hours in a Parr reactor at 125°C, 300 psig $H_2$, using 65% nickel on aluminum catalyst at 1.5 grams/100 grams solution. The final product was filtered (3 microns) using filter aid and the polymer precipitated in isopropyl alcohol and dried in a vacuum oven at 50°C overnight. The product for Example 7-B exhibited a dilute solution viscosity of 0.49dl/g (cyclohexane, 25°C), and exhibited a glass transition temperature (Tg) of 185°C under nitrogen, run at a 20°C/minute heat rate, for the third run. The polymer was 95% hydrogenated based on infra-red spectroscopic analysis.

## Copolymers of Dicyclopentadiene/Methyltetracyclododecene

Examples 8-12

Copolymers of dicyclopentadiene and methyltetracyclododecene were prepared in accordance with the procedure described above in Examples 1-6 except that the molar ratio of monomer to catalyst was about 2.5. The following details of Example 8 are provided so as to better illustrate the procedure herein.

Dicyclopentadiene at about 90% purity was used in a quantity of about 2.76 mls. and methyltetracyclododecene (about 98% pure) was used in a quantity of about 22 mls., (21.5 grams). The amount of n-hexene-1 was about 30 mls. (20 grams) and the ethylaluminum sesquichloride was used as a 25 weight percent solution in heptahe (0.19 mls., 0.17 grams). The molybdenum pentachloride catalyst was used in a 1.6 weight percent solution of ethylacetate/toluene at a ratio of 25 to 75 weight percent. The amount of such catalyst solution was about 1.5 mls. (1.2 grams). Cyclohexene was present in a volume of about 144 mls. Polymerization in all examples proceeded for about 30 minutes wherein a sample was removed, precipitated with isopropyl alcohol containing Ethyl 330 antioxidant, filtered and dried in a vacuum oven.

As discussed above, the ratio of dicyclopentadiene and methyltetracyclododecene was varied for Examples 8-12. The varying quantities of each monomer used and the properties of the copolymers are provided in Table 2.

Table 2

| Example No. | 8 | 9 | 10 | 11 | 12 |
|---|---|---|---|---|---|
| Polymer Composition (wt. %, DCPD/MTD)<br>Dilute Solution Viscosity (dl/gm, toluene, 25° C) | 10/90<br>0.55 | 25/75<br>0.57 | 50/50<br>0.50 | 75/25<br>0.34 (gel) | 85/15<br>(gel) |

Hydrogenations of the copolymers from Examples 8-12 were carried out by a standard procedure which is as follows. After polymerization, the polymer was retained in solution without filtration. The antioxidant Ethyl 330 was added to the solution. This polymer solution (cyclohexene) was diluted to 7.5% total solids with additional cyclohexene. The polymers were hydrogenated for about 4 hours in a Parr reactor at about 100° C, 200 psig $H_2$ using 65% nickel on alumina catalyst 5 grams per 100 grams solution. The final product was filtered using filter aid and the polymer precipitated in isopropyl alcohol, filtered and dried in a vacuum oven. The filter used was a 3 micron filter and the isopropyl alcohol served to coagulate the polymer. The vacuum oven was maintained at about 50° C overnight. Products were determined to be 100% hydrogenated by infra-red spectroscopy.

The hydrogenations of Examples 8-12 provided polymers with reduced glass transition temperatures. Particular data on the hydrogenated polymers obtained is provided in Table 3 below. The ratios below are in weight percent, the solution viscosity is given in dl/g, cyclohexane 25° C and the glass transition temperature was determined by DSC, in degrees Celsius, under nitrogen at a 20° C/minute heat rate during the third heat.

Table 3

| Example No. | 13 | 14 | 15 | 16 | 17 |
|---|---|---|---|---|---|
| Polymer Composition (wt. % DCPD/MTD) | 10/90 | 25/75 | 50/50 | 75/25 | 85/15 |
| Dilute Solution Viscosity (dl/g, cyclohexane 25° C) | --- | 0.63 | 0.56 | 0.50 | 0.43 |
| Glass Transition Temperature, Tg (° C, $N_2$, 20° C/min., 3rd heat) | 154 | 148 | 127 | 114 | 108 |
| % Hydrogenation | 100 | 100 | 100 | 100 | 93 |

Example 13

The polymerization procedure used in Examples 8-12 was scaled up to a quart bottle reactor. Monomer ratios were adjusted to provide a 80/20 methyltetracyclododecene/dicyclopentadiene copolymer and the ingredients were scaled up by a factor of 4. Duplicate runs were made and combined to provide the present example. Polymers obtained were coagulated with a non-solvent for the polymer, Tescol A, a commercially available azeotropic mixture of alcohols with a very small ketone component. The filtered polymer was dried in a vacuum oven. The dried polymer had a dilute solution viscosity of 0.53 dl/g (toluene, 25° C) and a glass transition temperature of 183° C.

The polymer product was dissolved in cyclohexane to give a 10% solid solution and hydrogenated in a 2-liter, Parr Zip-lock autoclave, using a triisobutyl aluminum-nickel acetylacetonate (2:1 molar ratio) catalyst system in an amount of 0.25 gms/100 gms polymer. The reaction temperature was about 75° C at the start

and 95° C at the finish while the hydrogen pressure was held at 250 psig over a reaction time of about 2 hours. The hydrogenated polymer cement was acid washed, water washed, coagulated with Tescol A, filtered and dried in a vacuum oven to provide a hydrogenated polymer with a dilute solution viscosity of 0.38 dl/g (toluene, 25° C) and a glass transition temperature (Tg) of 150° C.

Dielectric Properties

Dielectric properties of various saturated and unsaturated polymers are provided in Table 4 to illustrate the decrease in dielectric constant values with increasing saturation. The dielectric constants for saturated polymer is considerably lower.

Table 4

| Dielectric Constant (Dissipation Factor) | | |
|---|---|---|
| | Saturated | Unsaturated |
| Homopolymer DCPD[a] | | 2.9 (0.0066)[d] |
| 90/10 (wt. %) MTD[b]/MNB[c] | | 2.45 (0.0084)[d] |
| Hydrogenated 90/10 (wt %) MTD/MNB | 2.32 (0.007)[d] | |
| 1,4-cispolyisoprene (Hevea) | | 2.74[e] |
| polyethylene | 2.26[e] | |
| polyisobutylene | 2.23[e] | |

[a] DCPD = dicyclopentadiene
[b] MTD = methyltetracyclododecene
[c] MNB = methyl norbornene
[d] Measured at 1 megahertz
[e] Literature value

Oxidative Properties

To demonstrate improved oxidative stability for the hydrogenated polymers, a sample of the methyltetracyclododecene/dicyclopentadiene copolymer of Example 13 was roll milled at 350° F with the addition of about 1.2 parts by weight of antioxidant Ethyl 330. This blend was compression molded at 390° F into plaques of a dimension 6"x6"x1/8". Some plaques were aged within an oven at 100° C for about 100 hours and some were weathered in a carbon arc weatherometer for 100 hours. The physical properties of the plaques both before and after aging are shown in Table 5. Property retention after oven aging was very good.

Table 5

| Property | Before Aging | 100 Hrs. in 100° C Oven | 100 Hrs. in Carbon Arc Weatherometer |
|---|---|---|---|
| Yield Stress, psig | 9,930 | 9,150 (92) | 8,437 (85) |
| Yield Elongation, % | 6.9 | 5.5 (80) | 5.8 (84) |
| Break Stress, psig | 9,918 | 9,150 (92) | 8,437 (85) |
| Break Elongation, % | 6.9 | 5.4 (92) | 5.8 (84) |
| Elastic Modulus, psig | 196,350 | 197,900 (100) | 191,200 (97) |

( ) = % retention

Analysis of the Figure

The glass transition temperature values for both the hydrogenated polymers of this invention and their unsaturated precursors are plotted in the Figure to show the progressive increase in heat distortion temperature with composition of the copolymers. Also, a dramatic increase in heat distortion temperature is shown when utilizing dicyclopentadiene as opposed to methyl norbornene. Tg values are normally several degrees higher than heat distortion values but trends with composition variations are the same and curves for Tg and HDT's with composition will essentially be parallel. In addition, the curves of the Figure show how the heat distortion temperatures of hydrogenated ring-opening polymerized polymers correspond to their unsaturated derivatives.

A Tg value for a sample of homomethyltetracyclododecene having a dilute solution viscosity of about 0.46 (toluene, 25° C) and a glass transition temperature of about 201° C, is shown in the Figure to help provide curves A, C, and E.

This homomethyltetracyclododecene was hydrogenated in accordance with the procedure given in Example 13 at 10.2% total solids in cyclohexene with 1.0 grams nickel acetylacetonate per 100 grams polymer and 0.7 moles triisobutyl aluminum per mole nickel acetylacetonate. The starting hydrogenation temperature was about 75° C and the final temperature about 93° C. Hydrogenation proceeded over about 2.3 hours at 1200 psig hydrogen pressure. The hydrogenated product had a dilute solution viscosity of about 0.32 dl/g (cyclohexane, 25° C) and a glass transition temperature of about 166° C.

Additional data appears in the Figure and provides loci for curves B and D.

The Tg values from the resins of Examples 1-6 provide the additional data points for curve A. The Tg value for the resins of Examples 7-A and 7-B provide two points which define curve B along with the Tg value of 166° C for the hydrogenated homomethyltetracyclododecene described above. Curve C is defined by the Tg values for homopolymers of methyltetracyclododecene (MTD) and an approximate literature value for dicyclopentadiene of 155° C. The Tg values for resins of Examples 13-17 provide points for curve D. Curve E is defined by Tg values for homomethyltetracyclododecene and an approximate literature Tg value of 45° C for methylnorbornene.

## CONCLUSION

While the invention has been disclosed in this patent application by reference to the details of preferred embodiments of the invention, it is to be understood that this disclosure is intended in an illustrative rather than in a limiting sense, as it is contemplated that modification will readily occur to those skilled in the art, within the spirit of the invention and the scope of the appended claims.

## Claims

1. A composition substantially comprised of a hydrogenated, ring-opened polymerized polymer wherein at least 10 weight percent and up to about 100 weight percent of said hydrogenated ring-opened polymerized polymer comprises repeat units having a formula selected from the group consisting of Formulas I, II and III

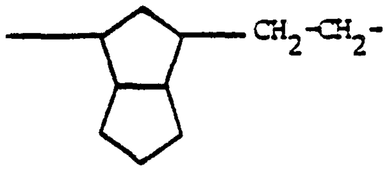

I

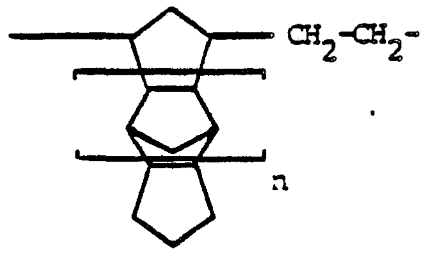

II

and

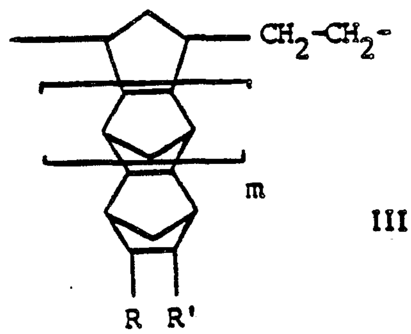

III

wherein n is a value of from 1-10, m is a value of from 1-10, and both R and R′ are selected from the group consisting of hydrogen, halogen, $C_1$-$C_{12}$ alkyl, $C_2$-$C_{12}$ alkenyl, $C_6$-$C_{12}$ cycloalkyl, $C_6$-$C_{12}$ aryl, and $C_7$-$C_{12}$ alkylaryl.

2. A composition as in claim 1 wherein the hydrogenated ring-opened polymerized polymer is derived from monomers which comprise cycloolefin monomers, the repeat units of Formula I are provided by dicyclopentadiene monomers when polymerized and hydrogenated, the repeat units of Formula II are provided by monomeric polycyclic olefins of Formula IV when polymerized and hydrogenated and the repeat units of Formula III are provided by monomeric polycyclic olefins of Formula V when polymerized and hydrogenated;

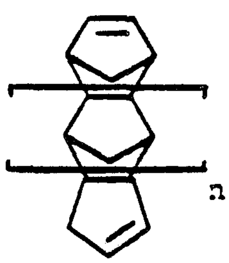

IV

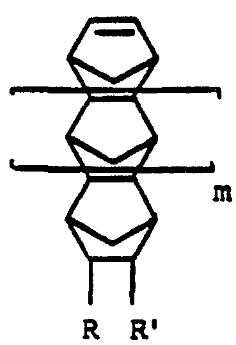

V

wherein n, m, R and R′ are as defined in claim 1.

3. A composition as in claim 2 wherein n of Formula IV is limited to from 1-6, m of Formula V is limited to from 1-6 and R and R′ are limited to hydrogen, ethyl and methyl.

4. A composition as in claim 1 wherein at least 25% by weight of said hydrogenated ring-opened polymerized polymer comprises repeat units of Formula I.

5. A composition as in claim 2 wherein at least 50% by weight of said hydrogenated ring-opened polymerized polymer comprises repeat units of a formula selected from the group consisting of Formulas I, II and III.

6. A composition as in claim 1 wherein the hydrogenated ring-opened polymerized polymer is derived from cycloolefin monomers all of which provide a repeat unit in conformance with a formula selected from the group consisting of Formulas I, II and III, once polymerized and hydrogenated.

7. A composition as in claim 6 wherein the hydrogenated ring-opened polymerized polymer is derived from cycloolefin monomers selected from the group consisting of dicyclopentadiene, hexacycloheptadecene, 2-methyl-hexacycloheptadecene, octacyclodocosene, and 2-methyloctacyclodocosene.

8. A composition as in claim 2 wherein the said cycloolefin monomers additionally comprise bicyclic norbornene, substituted bicyclic norbornenes, tetracyclododecene and substituted tetracyclododecenes.

9. A composition as in claim 8 wherein said bicyclic norbornene and substituted bicyclic norbornenes are of the formula

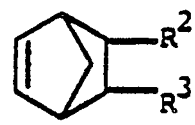

VI

and said tetracyclododecenes and said substituted tetracyclododecenes are of the formula

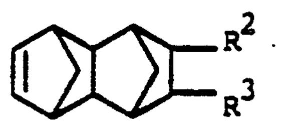

VII

wherein $R^2$ and $R^3$ are selected from hydrogen, $C_1$-$C_{12}$ alkyl, $C_6$-$C_{12}$ cycloalkyl, and $C_6$-$C_{12}$ aryl.

10. A composition as in claim 9 wherein the substituted bicyclic norbornenes are selected from 5-methyl-2-norbornene and 5-ethyl-2-norbornene and the substituted tetracyclododecene is 2-methyltetracyclododecene.

11. A composition as in claim 5 wherein the hydrogenated, ring-opened polymerized polymer additionally comprises repeat units obtained from monocycloolefins selected from the group consisting of cyclododecene, cyclododecyl, cyclododecatriene, cycloheptene, cyclooctene and cyclopentadiene, cyclopentene and cyclodecene.

12. A composition as in claim 5 wherein the hydrogenated, ring-opened polymerized polymer additionally comprises repeat units obtained from incorporation of acyclic alpha-olefins in a quantity of less than 10 weight percent of the total monomers.

13. A composition as in claim 12 wherein said acyclic alpha-olefin is hexene-1.

14. A composition substantially comprised of a hydrogenated, ring-opened polymerized polymer derived from cycloolefin monomers of which at least about 50% by weight are dicyclopentadiene with the remaining portion being selected from the group consisting of monomeric polycyclic olefins of Formula IV, tetracyclododecene, substituted tetracyclododecenes and hexacycloheptadecene.

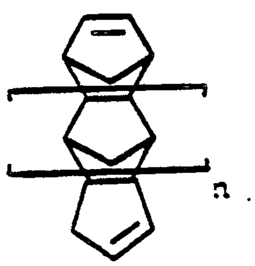

IV

wherein n is limited to a whole number of from 2-10.

15. A composition substantially comprised of a hydrogenated ring-opened polymerized polymer derived from cycloolefin monomers wherein said cycloolefin monomers comprise about 25-90 weight percent dicyclopentadiene and from 10-45 weight percent of monomers selected from the group consisting of tetracyclododecene, methyltetracyclododecene, ethyltetracyclododecene, and hexacycloheptadecene.

16. A composition substantially comprised of a hydrogenated ring-opened polymerized polymer derived from about 100% dicyclopentadiene monomers.

17. A composition substantially comprised of a hydrogenated, ring-opened polymerized polymer derived from cycloolefin monomers of which about 25-100 weight percent are monomeric polycyclic compounds of Formula V below:

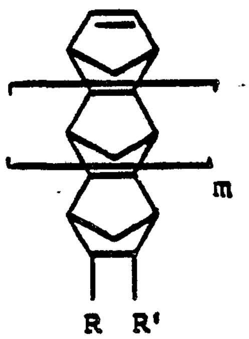

V

wherein m is from 1 to 20, and both R and R′ are selected from hydrogen, $C_1$-$C_{12}$ alkyl, $C_2$-$C_{12}$, alkenyl, $C_6$-$C_{12}$ aryl and $C_6$-$C_{12}$ cycloalkyl radicals.

18. A composition as in claim 17 wherein the monomeric polycyclic olefin is selected from hexacycloheptadecene and methylhexacycloheptadecene.

19. A composition as in claim 17 wherein the hydrogenated, ring-opened polymerized polymer is derived from about 100% hexacycloheptadecene and methylhexacycloheptadecene monomers.

20. A composition as in claim 17 wherein the ring-opening polymerized polymer is derived from hexacycloheptadecene, tetracyclododecene and their methyl substituted derivatives.

21. A composition as in claim 1 wherein from above about 50% to about 100% of the olefinic carbons of the ring opened polymerized polymer are saturated by hydrogenation.

22. A composition as in claim 14 wherein from above about 50% to about 100% of the olefinic carbons of the ring opened polymerized polymer are saturated by hydrogenation.

23. A composition as in claim 17 wherein from above about 50% to about 100% of the olefinic carbon atoms of the ring opened polymerized polymer are saturated by hydrogenation.

Neu eingereicht / Newly filed
Nouvellement déposé



POLYMER Tg vs WEIGHT % MONAMER CONSTITUENTS

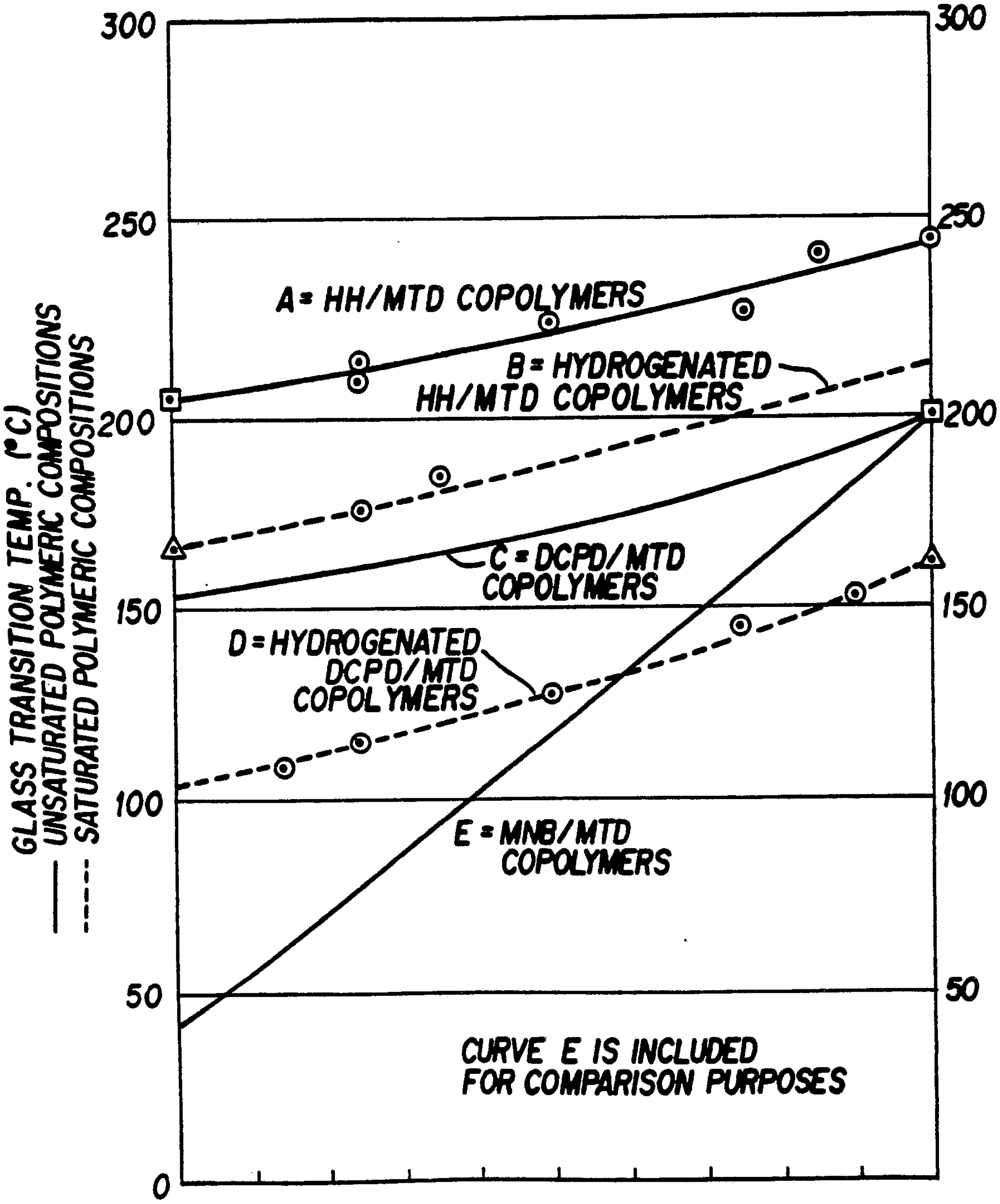


| CURVE | | | | |
|---|---|---|---|---|
| A,B | 0 | HH | HEXACYCLOHEPTADECENE | 100 |
| | 100 | MTD | 9-METHYLTETRACYCLODODECENE | 0 WEIGHT % |
| C,D | 100 | DCPD | DICYCLOPENTADIENE | 0 |
| | 0 | MTD | 9-METHYLTETRACYCLODODECENE | 100 WEIGHT % |
| E | 100 | MNB | 4-METHYL-2 NORBORNENE | 0 |
| | 0 | MTD | 9-METHYLTETRACYCLODODECENE | 100 WEIGHT % |